# FASCICULE DE BREVET EUROPEEN

(11) **EP 2 817 198 B1**
(45) Date de publication et mention de la délivrance du brevet: **04.11.2015**
(21) Numéro de dépôt: 13705779.0
(22) Date de dépôt: 22.02.2013
(51) Int. Cl.: B62D 1/16, F16D 3/38, B62D 7/22, F16D 3/76

(54) **ASSEMBLAGE ELASTIQUE D'UNE MACHOIRE DE JOINT DE CARDAN AVEC UN ARBRE DE COLONNE DE DIRECTION**
ELASTISCHE KUPPLUNG EINER KARDANGABEL MIT EINER LENKSÄULE
ELASTIC ASSEMBLY OF A CARDAN YOKE WITH A STEERING SHAFT

(30) Priorité: 22.02.2012 FR 1251599
(43) Date de publication de la demande: 31.12.2014
(73) Titulaire: Robert Bosch Automotive Steering Vendôme, 41100 Vendome (FR)
(72) Inventeur: GENET, Nicolas, F-41100 Vendome (FR); CUILLER, Dominique, F-41100 Aze (FR); GOULAY, Pascal, F-41100 Crucheray (FR)
(74) Mandataire: Bugnion Genève
(86) Numéro de dépôt international: PCT/EP2013/053583
(87) Numéro de publication internationale: WO 2013/124427

(56) Documents cités:
- DE-A1- 19 821 503
- FR-A1- 2 816 677
- US-A- 5 956 836

## Description

### DOMAINE TECHNIQUE DE L'INVENTION

L'invention se rapporte à un assemblage entre une mâchoire d'un joint de cardan et un arbre de colonne de direction avec interposition d'un manchon filtrant les bruits et vibrations.

### ETAT DE LA TECHNIQUE ANTERIEURE

La colonne de direction est le mécanisme qui permet de transmettre le mouvement de rotation du volant à la crémaillère de direction d'un véhicule. Elle peut être munie d'un élément filtrant qui permet de filtrer les vibrations provenant de la route et du moteur via le berceau avant. Cet élément filtrant est souvent constitué par un manchon élastique interposé en série entre deux éléments de la colonne, généralement entre un arbre plein ou creux et une mâchoire de joint de cardan. En cas de détérioration de l'élément filtrant il convient de sécuriser la liaison pour assurer la transmission du couple entre le volant et la crémaillère de direction. Ainsi est-il proposé dans le document FR 2 464 404 d'équiper la mâchoire de joint de cardan d'une ou plusieurs pattes qui viennent en prise dans des encoches ou des ouvertures correspondantes prévues dans la pièce tubulaire pour assurer, en cas de destruction du manchon, une permanence de l'entraînement en rotation ainsi qu'une localisation axiale de la mâchoire de joint de cardan par rapport à la pièce tubulaire. Plusieurs formes d'ouvertures, gâches ou encoches sont proposées, mais aucune n'est entièrement satisfaisante, certaines permettant d'assurer une localisation axiale en extension et en rétractation mais impliquant des difficultés de montage ou de fabrication, les autres, plus simples à assembler, n'assurant pas une localisation axiale dans les deux sens.

Dans le document FR 2 816 677 est présenté un assemblage entre un arbre une mâchoire de joint de cardan. L'extrémité de l'arbre, de section non circulaire, est montée dans un trou axial de section complémentaire effectué dans la mâchoire de joint de cardan. L'extrémité de l'arbre est reliée à la mâchoire de joint de cardan par l'intermédiaire d'un élément élastique tubulaire constituant un amortisseur de vibrations. L'extrémité de l'arbre est en outre emmanchée en force dans un manchon de forme globalement complémentaire, sur lequel est fixé l'élément élastique tubulaire. Ce dernier est entouré par une bague de section circulaire emmanchée en force dans une cavité cylindrique de la mâchoire de joint de cardan, communiquant avec le trou axial. L'élément tubulaire est ainsi comprimé entre le manchon et la bague. La forme non circulaire de l'extrémité de l'arbre engagée dans le trou axial de forme complémentaire permet de limiter la rotation relative entre l'arbre et la mâchoire de joint de cardan. Toutefois, le manchon sur lequel est fixé l'élément élastique présente une section non circulaire correspondant à celle de l'extrémité de l'arbre, de sorte que l'épaisseur de l'élément élastique tubulaire, entre le manchon et la bague, n'est pas constante, d'où un comportement élastique non linéaire et un risque de détérioration accélérée de l'élément élastique au niveau de ses zones de moindre épaisseur. De plus, une indexation angulaire de la mâchoire de joint de cardan par rapport à l'arbre est nécessaire lors de l'assemblage.

Dans le document DE 198 21 503 est décrit un autre assemblage entre une extrémité d'arbre de section non circulaire et une pièce formant mâchoire de joint de cardan, présentant également une difficulté d'indexation angulaire de l'arbre par rapport à la mâchoire au moment du montage.

### EXPOSÉ DE L'INVENTION

L'invention vise à remédier aux inconvénients de l'état de la technique et à proposer un assemblage élastique simplifié entre une mâchoire de joint de cardan et un arbre de colonne de direction, qui se prête à un assemblage automatique ou semi-automatique à cadence élevée, tout en assurant, en cas de destruction de l'élément élastique, un fonctionnement en mode dégradé satisfaisant.

Pour ce faire est proposé, selon un premier aspect de l'invention, un assemblage d'un arbre avec une mâchoire de joint de cardan constituée par une pièce métallique définissant un axe géométrique de référence et présentant une première extrémité façonnée de manière à définir deux branches de montage d'un croisillon de joint de cardan et des découpes de débattement, une deuxième extrémité formant un moyeu cylindrique, un manchon élastique étant emmanché serré sur l'arbre et dans le moyeu, l'arbre présentant une extrémité axiale tubulaire faisant saillie depuis le manchon élastique vers les branches, l'extrémité tubulaire de l'arbre présentant au moins un relief de localisation venant latéralement en regard et à distance d'au moins un relief complémentaire de la mâchoire, le relief de localisation et le relief complémentaire étant conformés de manière à pouvoir s'interpénétrer par un mouvement relatif axial entre l'arbre et la mâchoire pour limiter les mouvements relatifs de rotation autour de l'axe de référence entre l'arbre et la mâchoire et pour limiter les mouvements relatif axiaux entre l'arbre et la mâchoire dans un sens d'interpénétration. La mâchoire comporte en outre une cloison intermédiaire s'étendant perpendiculairement à l'axe de référence dans une position intermédiaire entre le moyeu et les branches, la cloison intermédiaire fermant partiellement le moyeu et étant pourvue d'un trou de passage pour l'extrémité tubulaire de l'arbre et en ce que l'extrémité axiale de l'arbre présente au moins localement un rabat de matière qui est rabattu radialement vers l'extérieur de manière à former une butée axiale coopérant avec la cloison intermédiaire pour limiter les mouvements axiaux relatif entre l'arbre et la mâchoire dans un sens d'extraction opposé au sens d'interpénétration. Le relief de localisation comporte une encoche ouverte à l'extrémité axiale ou une patte faisant saillie axialement, le relief complémentaire étant constitué par des formes spécifiques du trou incluant une patte complémentaire ou une encoche complémentaire de la mâchoire.

L'assemblage peut aisément être fabriqué à partir des trois pièces constituées par le manchon, l'arbre sur lequel le rabat de matière n'a pas encore été formé, et la mâchoire. Il suffit dans un premier temps d'emmancher ensemble les trois pièces, en une ou deux étapes successives (le manchon sur l'arbre, puis le tout dans le moyeu de la mâchoire, ou le manchon dans le moyeu de la mâchoire, puis le tout sur l'arbre, ou les deux emmanchements faits conjointement), puis dans un deuxième temps, de former le ou les rabats de matière. Il est à noter que la forme du ou des reliefs de localisation et du ou des reliefs complémentaires sont choisies pour que ceux-ci s'interpénètrent au moment de l'emmanchement du simple fait du mouvement axial d'emmanchement.

Les mouvements axiaux relatifs entre l'arbre et la mâchoire sont limités de manière à autoriser un débattement axial relatif entre l'arbre et la mâchoire. Ce débattement est suffisant pour permettre au manchon élastique d'assurer sa fonction, mais suffisamment faible pour qu'en cas de détérioration ou rupture du manchon élastique, une localisation axiale soit assurée dans les deux sens. Pour protéger le manchon élastique, on pourra prévoir que le débattement axial relatif autorisé reste inférieur à la limite de déformation élastique axiale du manchon.

De même, les mouvements rotatifs relatifs entre l'arbre et la mâchoire sont limités de manière à autoriser un débattement angulaire relatif entre l'arbre et la mâchoire. Ce débattement angulaire est suffisant pour permettre au manchon élastique d'assurer sa fonction, mais suffisamment faible pour qu'en cas de détérioration ou rupture du manchon élastique, une localisation angulaire soit assurée dans les deux sens. Pour protéger le manchon élastique, on pourra prévoir que le débattement angulaire relatif autorisé reste inférieur à la limite de déformation élastique en torsion du manchon.

De manière préférentielle, le manchon élastique comporte au moins un élément cylindrique en caoutchouc ou en matériau élastomère. Cet élément cylindrique en caoutchouc peut être disposé entre une bague intérieure rigide et une bague extérieure rigide.

Naturellement, le nombre de reliefs de localisation et de reliefs complémentaires peut être multiplié. Pour un arbre aux dimensions habituellement rencontrées dans les applications automobiles concernées, deux encoches diamétralement opposées coopérant chacune avec une patte s'avèrent particulièrement adaptées.

L'arbre peut être plein ou creux, le cas échéant cannelé intérieurement ou extérieurement

Selon un autre aspect de l'invention, celle-ci a trait à un procédé de montage de l'assemblage précédemment défini suivant lequel, après avoir emmanché le manchon élastique, l'arbre et le moyeu de telle manière que l'extrémité de l'arbre émerge du trou du côté de la cloison intermédiaire opposé au moyeu, on déforme le bord d'extrémité de l'arbre radialement vers l'extérieur pour former le rabat de matière. L'ordre des opérations d'emmanchement (manchon sur arbre, puis dans le moyeu, ou manchon dans le moyeu puis sur l'arbre, ou les deux emmanchements faits simultanément) est indifférent. La déformation peut être faite notamment par sertissage, bouterollage, martelage, ou emboutissage.

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue en perspective une transmission de colonne de direction ;
- la figure 2, une vue en coupe de l'assemblage selon l'invention entre une mâchoire de joint de cardan et un arbre de la colonne de direction de la figure 1 ;
- la figure 3, une vue en perspective d'un manchon filtrant de l'assemblage de la figure 2 ;
- la figure 4, une vue en perspective de la mâchoire de joint de cardan de la figure 2 ;
- la figure 5, une autre vue en perspective de la mâchoire de joint de cardan de la figure 2 ;
- la figure 6, une vue en perspective de l'assemblage de la figure 2 ;
- la figure 7, une vue en perspective de l'arbre de la figure 2, avant son assemblage avec la mâchoire.

Pour plus de clarté, les éléments identiques sont repérés par des signes de référence identiques sur l'ensemble des figures.

### DESCRIPTION DETAILLEE D'UN MODE DE RÉALISATION

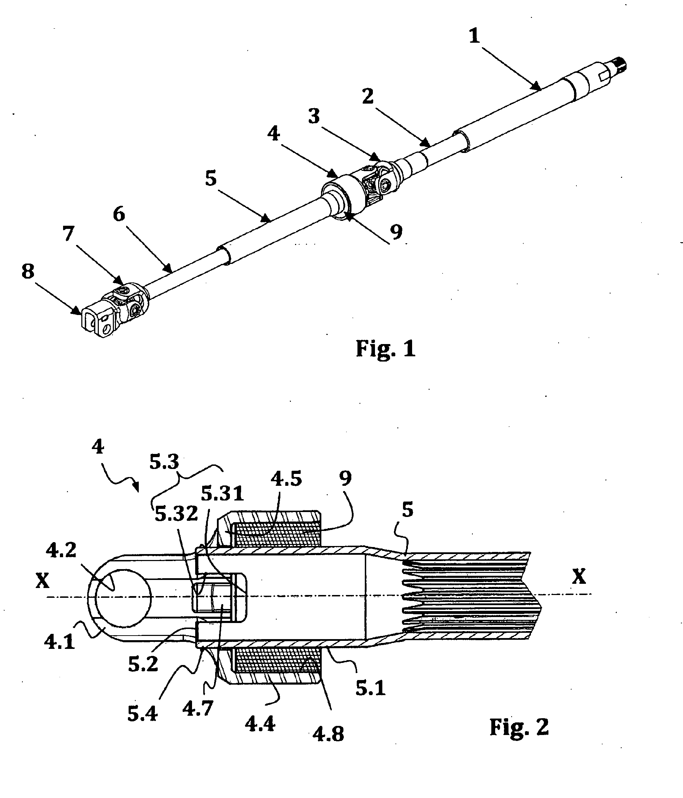

Sur la figure **1** est illustrée une transmission de colonne de direction comprenant notamment un axe volant femelle **1**, un arbre supérieur **2**, une mâchoire supérieure de joint de cardan **3**, une mâchoire inférieure de joint de cardan **4**, un arbre inférieur femelle creux **5**, un arbre inférieur mâle **6**, une mâchoire de joint de cardan supérieure **7** et une mâchoire de joint de cardan inférieure côté pignon **8**. Un manchon élastique filtrant **9** est interposé entre la mâchoire inférieure de joint de cardan **4** et l'arbre **5**.

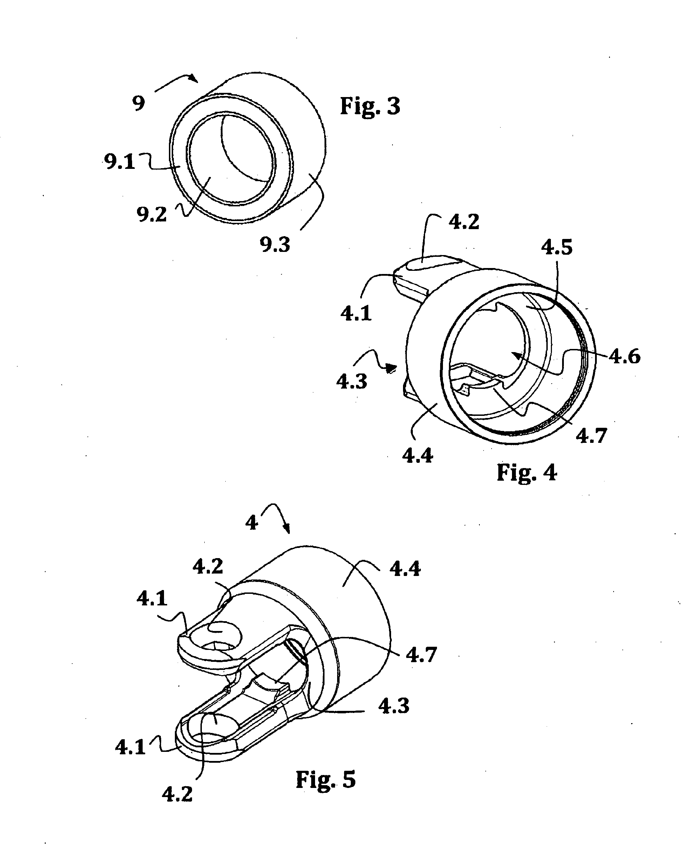

La mâchoire **4**, visible en détail sur les figures **4** et **5**, est constituée par une pièce métallique définissant un axe géométrique **X-X** de référence. A une extrémité axiale, la pièce est façonnée de manière à définir deux branches **4.1** en regard l'une de l'autre et présentant deux alésages coaxiaux **4.2** de montage d'un croisillon de joint de cardan, des découpes de débattement **4.3** étant prévues entre les deux branches **4.1.** L'autre extrémité axiale de la mâchoire forme un moyeu cylindrique **4.4.** Une cloison intermédiaire **4.5** perpendiculaire à l'axe de référence **X-X**, ferme partiellement le moyeu cylindrique en délimitant un trou axial circulaire **4.6** et en matérialisant deux pattes **4.7** faisant saillie radialement dans ce trou **4.6**.

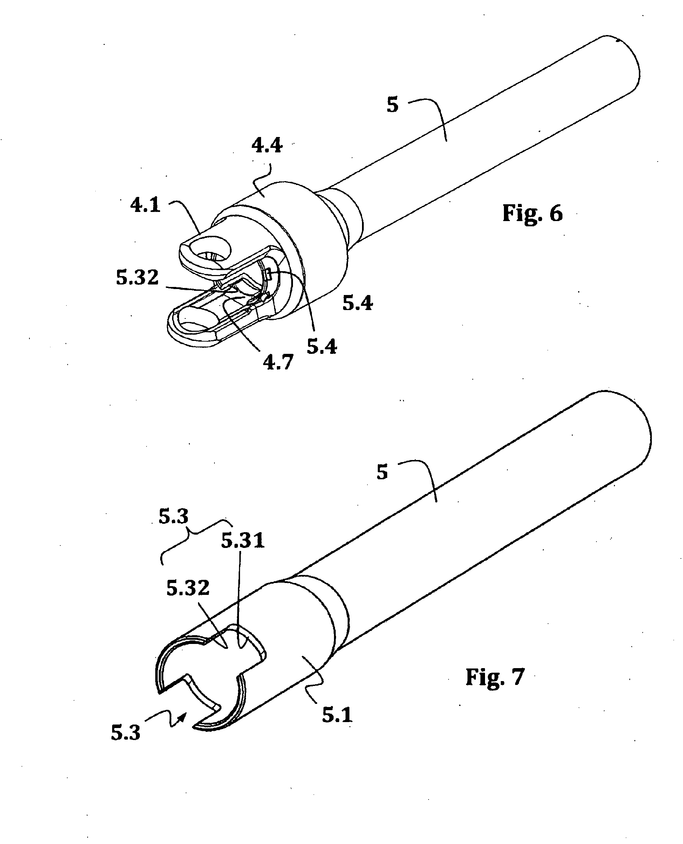

L'assemblage entre la mâchoire **4**, l'arbre **5** et le manchon filtrant **9** est illustré plus en détail sur les figures **2** et **6**. L'arbre **5** est engagé à l'intérieur du trou **4.6** avec un jeu radial. Le manchon élastique filtrant **9** est emmanché serré sur l'arbre **5** et dans le moyeu **4.4** qui présentent à cet effet des portées cylindriques **5.1** et **4.8** en regard l'une de l'autre. L'arbre **5** présente un bord d'extrémité **5.2** et deux encoches **5.3** de forme générale rectangulaire, qui se font face et s'étendent depuis le bord **5.2** au travers du trou **4.6** et parallèlement à l'axe de référence **X-X** de part et d'autre de la cloison **4.5.** Chaque encoche présente une cloison de fond **5.31** et des cloisons latérales **5.32** qui se font face à distances l'une de l'autre de manière à pouvoir accueillir une des pattes radiales **4.7** formée par la cloison intermédiaire **4.5**.

Le bord **5.2** de l'arbre est localement façonné de manière à présenter quatre languettes **5.4**, deux à deux symétriques par rapport à l'axe **X-X**, faisant saillie radialement vers l'extérieur, et disposées à l'intérieur d'une enveloppe géométrique cylindrique ayant un diamètre extérieur supérieur au diamètre du trou.

On a représenté sur la figure **7** l'arbre **5** avant son introduction dans la mâchoire **4**. Comme on peut le constater dans cet état avant montage, le bord est exempt de languettes et l'extrémité tubulaire de l'arbre a une section compatible avec son insertion dans le trou **4.6**. Les languettes **5.4** visibles sur la figure **6** sont donc façonnées après que l'arbre a été introduit dans le trou **4.6**, lors de l'emmanchement de l'arbre **5** (portant le cas échéant le manchon **9** déjà emmanché serré sur la portée **5.1**) dans la mâchoire. Les languettes **5.4** peuvent être façonnée par exemple par sertissage, martelage, bouterollage, ou plus généralement par toute sollicitation mécanique accompagnée ou non d'un traitement thermique, et permettant d'induire une déformation plastique permanente des languettes radialement vers l'extérieur.

Comme illustré sur la figure **3**, le manchon élastique filtrant **9** comporte un élément cylindrique en caoutchouc ou en matière élastomère **9.1** relativement épais, de préférence gainé intérieurement et extérieurement par deux bagues rigides **9.2, 9.3.**

Dans la position nominale de la figure **2**, les languettes sont disposées à une distance **J1** de la cloison intermédiaire **4.5**, alors que les pattes radiales **4.7** sont à une distance **J3** du fond **5.31** des encoches et à une distance **J2** des cloisons latérales **5.32** des encoches **5.3**. Il existe par conséquent aussi bien en translation parallèlement à l'axe **X-X** qu'en rotation autour de l'axe **X-X** un jeu fonctionnel de débattement donnant à la mâchoire **4** des degrés de liberté de mouvement correspondants par rapport à l'arbre **5**, par déformation du manchon élastique filtrant **9**.

On peut dimensionner les jeux fonctionnels pour que dans toute la gamme de fonctionnement prévue, l'intégralité du couple soit transmis par le manchon élastique filtrant, sans contact entre l'arbre **5** et la mâchoire **4**. On peut également préférer un dimensionnement des jeux fonctionnels tel que pour des sollicitations extrêmes, un contact axial ou radial entre l'arbre **5** et la mâchoire **4** soit possible, de sorte qu'une partie du couple ou des efforts soit transmise directement par les pièces métalliques. Cette dernière solution offre l'avantage d'éviter une détérioration possible du manchon filtrant **9** dans des conditions extrêmes, par exemple en cas de choc d'une roue directrice sur un trottoir.

En cas de détérioration ou de destruction du manchon filtrant **9**, par exemple suite à des attaques mécaniques, thermiques et/ou chimiques, les languettes **5.4** et les pattes **4.7**, coopérant respectivement avec la cloison intermédiaire **4.5** et avec les cloisons **5.31, 5.32** de l'encoche, localisent l'arbre dans la mâchoire. Il est alors toujours possible de transmettre, certes dans un mode de fonctionnement dégradé, un couple et une rotation du volant aux roues directrice du véhicule.

De nombreuses variantes sont possibles. Le positionnement et le nombre de languettes **5.4** peuvent être choisis suivant les dimensions des pièces. On peut également envisager une déformation uniforme de l'ensemble du bord **5.2** de l'arbre vers l'extérieur plutôt que des déformations locales.

L'arbre peut être plein, sauf à son extrémité qui reste tubulaire.

## Revendications

1. Assemblage d'un arbre (5) avec une mâchoire (4) de joint de cardan constituée par une pièce métallique définissant un axe géométrique de référence (X-X) et présentant une première extrémité façonnée de manière à définir deux branches (4.1) de montage d'un croisillon de joint de cardan et des découpes de débattement (4.2), une deuxième extrémité formant un moyeu cylindrique (4.4), un manchon élastique (9) étant emmanché sur l'arbre (5) et dans le moyeu (4.4), l'arbre présentant une extrémité axiale tubulaire faisant saillie depuis le manchon élastique (9) vers les branches (4.1), l'extrémité tubulaire de l'arbre (5) présentant au moins un relief de localisation (5.3) venant latéralement en regard et à distance d'au moins un relief complémentaire (4.7) de la mâchoire, le relief de localisation (5.3) et le relief complémentaire (4.7) étant conformés de manière à pouvoir s'interpénétrer par un mouvement relatif axial entre l'arbre (5) et la mâchoire (4) pour limiter les mouvements rotatifs relatifs autour de l'axe de référence entre l'arbre (5) et la mâchoire (4) et pour limiter les mouvements relatif axiaux entre l'arbre (5) et la mâchoire (4) dans un sens d'interpénétration,
la mâchoire (4) comportant en outre une cloison intermédiaire (4.5) s'étendant perpendiculairement à l'axe de référence (X-X) dans une position intermédiaire entre le moyeu (4.4) et les branches (4.1), la cloison intermédiaire (4.5) fermant partiellement le moyeu et étant pourvue d'un trou (4.6) de passage pour l'extrémité tubulaire de l'arbre, et l'extrémité tubulaire de l'arbre présentant au moins localement un rabat de matière (5.4) qui est rabattu radialement vers l'extérieur de manière à former une butée axiale coopérant avec la cloison intermédiaire (4.5) pour limiter les mouvements axiaux relatif entre l'arbre et la mâchoire dans un sens d'extraction opposé au sens d'interpénétration, **caractérisé en ce que**
le manchon élastique (9) est cylindrique et emmanché sur une portée cylindrique (5.1) de l'arbre (5) et dans une portée cylindrique (4.8) du moyeu (4.4),
le relief de localisation comporte une encoche (5.3) ouverte à l'extrémité axiale ou une patte faisant saillie axialement, et
le relief complémentaire est constitué par des formes spécifiques du trou (4.6) et comporte une patte complémentaire (4.7) ou une encoche complémentaire de la mâchoire.

2. Assemblage selon la revendication 1, **caractérisé en ce que** les mouvements axiaux relatifs entre l'arbre (5) et la mâchoire (4) sont limités de manière à autoriser un débattement axial relatif entre l'arbre (5) et la mâchoire (4).

3. Assemblage selon la revendication 2, **caractérisé en ce que** le débattement axial relatif autorisé est inférieur à la limite de déformation élastique axiale du manchon (9).

4. Assemblage selon l'une quelconque des revendications précédentes, **caractérisé en ce que** les mouvements rotatifs relatifs entre l'arbre (5) et la mâchoire (4) sont limités de manière à autoriser un débattement angulaire relatif entre l'arbre (5) et la mâchoire (4).

5. Assemblage selon la revendication 4, **caractérisé en ce que** lé débattement angulaire relatif autorisé est inférieur à la limite de déformation élastique en torsion du manchon (9).

6. Procédé de montage d'un assemblage selon l'une quelconque des revendications précédentes, **caractérisé en ce que**, après avoir emmanché le manchon élastique (9), l'arbre (5) et le moyeu (4.4), de telle manière que l'extrémité de l'arbre émerge du trou (4.6) du côté de la cloison intermédiaire (4.5) opposé au moyeu (4.4), on déforme l'extrémité de l'arbre radialement vers l'extérieur pour former le rabat de matière (5.4).

7. Procédé de montage selon la revendication 6, **caractérisé en ce que** la déformation est faite par sertissage, bouterollage, martelage, ou emboutissage.

## Patentansprüche

1. Montage einer Welle (5) mit einem Kreuzgelenkscharnier (4), das von einem Metallteil gebildet ist, das eine geometrische Referenzachse (X-X) definiert und ein erstes Ende, das derart bearbeitet ist, dass zwei Montageschenkel (4.1) eines Kreuzgelenk-Gelenkkreuzes und Federungsausschnitte (4.2) definiert sind, und ein zweites Ende, das eine zylindrische Nabe (4.4) bildet, aufweist, wobei eine elastische Muffe (9) auf die Welle (5) und in die Nabe (4.4) gepresst ist, wobei die Welle ein axiales rohrförmiges Ende aufweist, das aus der elastischen Muffe (9) in Richtung der Schenkel (4.1) herausragt, wobei das rohrförmige Ende der Welle (5) mindestens ein Lokalisierungsrelief (5.3) aufweist, das sich seitlich gegenüber und von mindestens einem komplementären Relief (4.7) des Scharniers beabstandet befindet, wobei das Lokalisierungsrelief (5.3) und das komplementäre Relief (4.7) derart ausgebildet sind, dass sie sich mittels einer relativen axialen Bewegung zwischen der Welle (5) und dem Scharnier (4) gegenseitig durchdringen können, um die relativen Rotationsbewegungen um die Referenzachse zwischen der Welle (5) und dem Scharnier (4) zu begrenzen und um die relativen axialen Bewegungen zwischen der Welle (5) und dem Scharnier (4) in einer Durchdringungsrichtung zu begrenzen,
wobei das Scharnier (4) ferner eine Zwischenwand (4.5) aufweist, die sich senkrecht zur Referenzachse (X-X) in einer Zwischenposition zwischen der Nabe (4.4) und den Schenkeln (4.1) erstreckt, wobei die Zwischenwand (4.5) die Nabe teilweise verschließt und mit einem Durchgangsloch (4.6) für das rohrförmige Ende der Welle ausgestattet ist, und das rohrförmige Ende der Welle mindestens lokal einen Materialumschlag (5.4) aufweist, der radial nach außen umgeklappt ist, so dass ein axialer Anschlag gebildet ist, der mit der Zwischenwand (4.5) zusammenarbeitet, um die relativen axialen Bewegungen zwischen der Welle und dem Scharnier in einer zur gegenseitigen Durchdringungsrichtung entgegengesetzten Extraktionsrichtung zu begrenzen,
**dadurch gekennzeichnet, dass**
die elastische Muffe (9) zylindrisch ist und auf einem zylindrischen Vorsprung (5.1) der Welle (5) aufgepresst und in einen zylindrischen Vorsprung (4.8) der Nabe (4.4) eingepresst ist,
wobei das Lokalisierungsrelief eine am axialen Ende offene Kerbe (5.3) oder eine axial hervorstehende Lasche aufweist, und
das komplementäre Relief von speziellen Formen des Lochs (4.6) gebildet ist und eine komplementäre Lasche (4.7) oder eine komplementäre Kerbe des Scharniers aufweist.

2. Montage nach Anspruch 1, **dadurch gekennzeichnet, dass** die relativen axialen Bewegungen zwischen der Welle (5) und dem Scharnier (4) derart begrenzt sind, dass eine relative axiale Ausfederung zwischen der Welle (5) und dem Scharnier (4) gestattet ist.

3. Montage nach Anspruch 2, **dadurch gekennzeichnet, dass** die gestattete relative axiale Ausfederung kleiner als die Grenze der axialen elastischen Verformung der Muffe (9) ist.

4. Montage nach einem der vorangehenden Ansprüche, **dadurch gekennzeichnet, dass** die relativen Rotationsbewegungen zwischen der Welle (5) und dem Scharnier (4) so begrenzt sind, dass eine relative winklige Ausfederung zwischen der Welle (5) und dem Scharnier (4) gestattet ist.

5. Montage nach Anspruch 4, **dadurch gekennzeichnet, dass** die gestattete relative axiale Ausfederung kleiner als die Grenze der elastischen Torsionsverformung der Muffe (9) ist.

6. Montageverfahren einer Montage nach einem der vorangehenden Ansprüche, **dadurch gekennzeichnet, dass**, nach dem Verpressen der elastischen Muffe (9), der Welle (5) und der Nabe (4.4) derart, dass das Ende der Welle auf der Seite der Zwischenwand (4.5), die der Nabe (4.4) gegenüberliegt, aus dem Loch (4.6) hervorsteht, das Ende der Welle radial nach außen verformt wird, um den Materialumschlag (5.4) zu bilden.

7. Montageverfahren nach Anspruch 6, **dadurch gekennzeichnet, dass** die Verformung durch Falzen, Döppern, Hämmern oder Pressen erfolgt.

## Claims

1. An assembly of a shaft (5) with a jaw (4) of a universal joint made up of a metal part defining a geometric reference axis (X-X) and having a first end machined so as to define two branches (4.1) for mounting a crossmember of the universal joint and clearance cutouts (4.2), a second end forming a cylindrical hub (4.4), an elastic sleeve (9) being fitted on the shaft (5) and in the hub (4.4), the shaft having a tubular axial end protruding from the elastic sleeve (9) toward the branches (4.1), the tubular end of the shaft (5) having at least one locating ridge (5.3) coming laterally across from and separated from at least one complementary ridge (4.7) of the jaw, the locating ridge (5.3) and the complementary ridge (4.7) being configured so as to be able to penetrate one another through an axial relative movement between the shaft (5) and the jaw (4) to limit the relative rotating movements around the reference axis between the shaft (5) and the jaw (4) and to limit the axial relative movements between the shaft (5) and the jaw (4) in an interpenetration direction,
the jaw (4) further including an intermediate partition (4.5) extending perpendicular to the reference axis (X-X) in an intermediate position between the hub (4.4) and the branches (4.1), the intermediate partition (4.5) partially closing the hub and being provided with a passage hole (4.6) for the tubular end of the shaft, and the tubular end of the shaft having at least locally a fold of material (5.4) that is folded down radially toward the outside so as to form an axial stop cooperating with the intermediate partition (4.5) to limit the relative axial movements between the shaft and the jaw in a removal direction opposite the interpenetration direction,
**characterized in that**
the elastic sleeve (9) is cylindrical and fitted on a cylindrical bearing surface (5.1) of the shaft (5) and in a cylindrical bearing surface (4.8) of the hub (4.4),
the locating ridge including a notch (5.3) open at the axial end or a tab protruding axially, and
the complementary ridge is formed by specific forms of the hole (4.6) and includes a complementary tab (4.7) or a complementary notch of the jaw.

2. The assembly according to claim 1, **characterized in that** the relative axial movements between the shaft (5) and the jaw (4) are limited so as to allow a relative axial travel between the shaft (5) and the jaw (4).

3. The assembly according to claim 2, **characterized in that** the relative axial travel allowed is less than the axial elastic deformation limit of the sleeve (9).

4. The assembly according to any one of the preceding claims, **characterized in that** the relative rotating movements between the shaft (5) and the jaw (4) are limited so as to allow a relative angular travel between the shaft (5) and the jaw (4).

5. The assembly according to claim 4, **characterized in that** the authorized relative angular travel is less than the torsional elastic deformation limit of the sleeve (9).

6. A method for mounting an assembly according to any one of the preceding claims, **characterized in that**, after having fitted the elastic sleeve (9), the shaft (5) and the hub (4.4) such that the end of the shaft emerges from the hole (4.6) on the side of the intermediate partition (4.5) opposite the hub (4.4), the end of the shaft is radially outwardly deformed to form the fold of material (5.4).

7. The mounting method according to claim 6, **characterized in that** the deformation is done by crimping, heading, pounding, or stamping.
